# EUROPÄISCHE PATENTANMELDUNG

(11) **EP 1 386 529 A1**
(43) Veröffentlichungstag der Anmeldung: **04.02.2004**
(21) Anmeldenummer: 03017307.4
(22) Anmeldetag: 31.07.2003
(51) Int. Cl.: A01D 34/42, A01D 34/52

(54) **Schneidvorrichtung für Pflanzen**

(30) Priorität: 31.07.2002 DE 10234814
(71) Anmelder: Wolf-Geräte AG, 1630 Bulle (CH)
(72) Erfinder: Kolb, Walter, 57518 Betzdorf (DE); Simon, Michael, Dr., 57537 Mittelhof (DE)
(74) Vertreter: Brommer, Hans Joachim, Dr.-Ing.

(57) **Zusammenfassung**

Die Erfindung betrifft eine Schneidvorrichtung für Pflanzen, insbesondere Rasenmäher, mit zumindest einem rotierenden Messer (4a), das mit einer ortsfesten Gegenschneide (13a) zusammenwirkt. Dabei ist zumindest das Messer (4a) und/oder die Gegenschneide (13a) in jeweils einen Messerträger (3a, 14a) austauschbar angeordnet.

## Beschreibung

Die Erfindung geht aus von einer Schneidvorrichtung für Pflanzen, insbesondere Rasenmäher, mit zumindest einem rotierenden Messer, das mit einer ortsfesten Gegenschneide zusammenwirkt, wobei das Messer bogenförmig und schräg um die Rotationsachse herum angeordnet ist.

Derartige Schnittsysteme sind als Spindelmäher bekannt. Ihr Hauptvorteil besteht darin, dass die Gegenschneide einen sauberen Schnitt gewährleistet. Dadurch genügt eine geringere Drehzahl für das rotierende Messer und die Unfallgefahr durch herausgeschleuderte Gegenstände wird deutlich verringert.

Ein gewisser Nachteil der bekannten Schnittsysteme mit Gegenschneide besteht in der aufwendigen Herstellung, weil die Messer schraubengangförmig um die Rotationsachse herum angeordnet sind. Diese Messergeometrie verteuert auch das Nachschleifen der Messer, weil hierfür eine Spezialmaschine benötigt wird.

Aus diesem Grund wird heute überwiegend mit Schnittsystemen nach dem so genannten Sichelprinzip gearbeitet. Dabei rotieren die Messer nicht um eine horizontale Drehachse wie bei den Spindelmähern, sondern um eine vertikale Drehachse. Bedingt durch die fehlende Gegenschneide müssen sie mit hoher Drehzahl umlaufen. Dies bedingt einerseits eine starke Geräuschentwicklung, andererseits erhöhte Unfallgefahr durch herausgeschleuderte Gegenstände. Außerdem ist der Rasenschnitt nicht so sauber wegen der fehlenden Gegenschneide.

Ein Rasenmäher mit den Merkmalen des Oberbegriffes von Patentanspruch 1 ist durch die EP 050 151 bekannt geworden. Dabei bestehen die rotierenden Messer aus einer Vielzahl elliptischer Scheiben, die parallel zueinander unter einem Winkel von etwa 30° bis 50° auf ihrer gemeinsamen Rotationsachse angeordnet sind. Die Scheidkanten der rotierenden Messer erstrecken sich über den gesamten Umfang von 360°; hierzu sind die Scheiben benachbart zu den Umfangsenden der Hauptachse der Ellipsen-Kontur mit Ohren versehen, die sich von der Scheibenebene weg in entgegengesetzte Richtungen erstrecken, so dass sie unter einem spitzen Winkel mit der ortsfesten Gegenschneide zusammenwirken. Die Scheiben sind mehrlagig aufgebaut, nämlich aus zwei gehärteten Außenschichten und einer ungehärteten Zwischenschicht. Ihre Rotationsachse besteht aus einem Vierkantrohr mit radial abstehenden Flügeln, die einerseits zur Aussteifung der Scheiben, andererseits zur Erzielung einer Gebläsewirkung dienen.

Diese bekannte Messerkonstruktion bedarf eines hohen Herstellungsaufwandes, ist bei Verschleiß der Messer nur an Spezialmaschinen nachzuschleifen und neigt wegen der großflächigen, geschlossenen Ausbildung der Messerscheiben zum Verstopfen.

Der vorliegenden Erfindung liegt die Aufgabe zugrunde, dieses bekannte Schnittsystem mit Gegenschneide dahingehend zu verbessern, dass die Herstellungskosten deutlich verringert und die Funktion verbessert wird. Darüber hinaus soll auch die Aufrechterhaltung der Schneidfähigkeit - sei es durch Nachschleifen oder durch Austausch der Messer - wesentlich erleichtert werden.

Diese Aufgabe wird erfindungsgemäß dadurch gelöst, dass das zumindest eine Messer und/oder die Gegenschneide in jeweils einem Messerträger austauschbar angeordnet sind.

Hierdurch ergibt sich der Vorteil, dass das Messer oder die Gegenschneide zum Nachschleifen schnell und einfach ausgebaut werden können, ohne dass wie im bekannten Fall die komplette Antriebswelle demontiert werden muss. Außerdem sind die vereinzelten Messer, die plan innerhalb einer Ebene nur über einen kurzen Ellipsenbogen verlaufen, auf herkömmlichen Schleifmaschinen nachzubearbeiten, was im bekannten Fall nicht möglich ist.

Ein besonders leichter Austausch wird dadurch ermöglicht, dass das Messer und/oder die Gegenschneide durch eine Rast- oder Schnappverbindung in ihrem jeweiligen Messerträger, insbesondere in einem Schlitz desselben, gehalten sind. Dadurch kann der Austausch gegebenenfalls sogar ohne Werkzeuge durchgeführt werden. Für die Ausbildung dieser Rast- oder Schnappverbindung bieten sich dem Fachmann zahlreiche Möglichkeiten. Besonders günstig ist es, wenn das Messer etwa quer zur Schneidkante, im Fall des rotierenden Messers also etwa radial, in seinen zugeordneten Schlitz einsteckbar und sodann durch eine etwa axiale Verschiebung im Schlitz arretiert, insbesondere formschlüssig verrastet wird.

Im Fall des rotierenden Messers empfiehlt es sich, die Antriebswelle, die als Narbenkörper ausgebildet sein kann, mit durchgehenden, etwa axial verlaufenden Schlitzen zu versehen, in welche die Messerträger nacheinander eingeschoben werden. Die Antriebswelle weist mehrere in Umfangsrichtung aufeinander folgende Schlitze auf, so dass eine Vielzahl einzelner Messerträger in Umfangsrichtung wie auch in Axialrichtung aufeinander folgt.

Im Gegensatz zu der bekannten Konstruktion erstrecken sich die erfindungsgemäßen Messer nur über einen Umfangswinkel von maximal 150°, vorzugsweise maximal 100° eines um die Rotationsachse gedachten Kreisbogens, nämlich nur über den schwach gekrümmten Bereich der Ellipsen-Kontur. Dort ergibt sich eine hohe axiale Relativgeschwindigkeit zur Gegenschneide und somit ein besserer Schnitt. Außerdem trägt diese Vereinzelung der Messer und der Messerträger zu einer wesentlichen Verringerung der Verstopfungsgefahr bei, weil die Messer mitsamt ihren Messerträgern als lokale Lüfterflügel wirken, insbesondere, wenn in einer Radialebene der Rotationsachse vier oder mehr in Umfangsrichtung aufeinander folgende Messer angeordnet sind.

Damit die schrägstehenden Messer nicht zu einer einseitigen Anhäufung des abgeschnittenen Grases an der einen Seite des Rasenmähers führen, empfiehlt es sich, nicht alle Messer parallel zueinander anzuordnen, sondern vorzugsweise die Messer am einen Ende der Antriebswelle in ihrer Schrägstellung entgegengesetzt zu den axial benachbarten Messern zu orientieren, so dass das dort abgeschnittene Gras von dem Ende der Antriebswelle wegtransportiert wird.

Eine andere zweckmäßige Weiterbildung der Erfindung besteht darin, dass das Messer und/oder die Gegenschneide an seinem der Schneidkante gegenüberliegenden Rand mit einem Führungselement verbunden ist und dieses Führungselement austauschbar im Messerträger angeordnet ist. Das Messer ist dadurch wesentlich einfacher zu handhaben und auch zu montieren. Außerdem eröffnet sich dadurch die Möglichkeit, das Messer aus einem Stahlband, insbesondere Federstahlband, herzustellen, wogegen sein Führungselement ebenso wie der Messerträger aus Kunststoff bestehen. Dadurch sind die Messer mitsamt ihrem Führungselement äußerst kostengünstig herzustellen.

Eine andere zweckmäßige Weiterbildung der Erfindung besteht darin, dass das Messer und/oder die Gegenschneide durch Federelemente relativ gegeneinander vorgespannt sind. Dadurch ist sichergestellt, dass die Schneidelemente unabhängig von ihrem Verschleiß immer in Kontakt aneinander gehalten werden - und zwar sowohl über die Axialerstreckung wie auch über den Umfang der rotierenden Messer. Zweckmäßig erfolgt die Anfederung nicht einheitlich über die Antriebswelle oder die Gegenschneide, sondern individuell für jedes einzelne Messer beziehungsweise für jedes einzelne Segment der in Segmente unterteilte Gegenschneide. Besonders günstig ist es dabei, wenn die Federelemente zwischen dem Messerträger einerseits und dem Führungselement des Messers und/oder der Schneidkante andererseits angeordnet sind, insbesondere, indem sie unmittelbar an den Messerträger und/oder an das Führungselement angeformt sind, etwa in Form von elastischen Biegebalken, Federzungen oder dergleichen.

Die bereits angesprochene Segmentierung der Gegenschneide kann mit der Unterteilung der rotierenden Messer in Axialrichtung korrespondieren, es kann aber durchaus auch eine abweichende Unterteilung in Betracht kommt, insbesondere wenn sich die rotierenden Messer in Axialrichtung stark überlappen.

Weitere Merkmale und Vorteile der Erfindung ergeben sich aus den Unteransprüchen und aus der Zeichnung und der nachfolgenden Beschreibung von Ausführungsbeispielen; dabei zeigt
- Fig. 1: den Einsatz der erfindungsgemäßen Schneidvorrichtung in einem teilweise dargestellten Rasenmäher in Schrägansicht;
- Fig. 2: einen Radialschnitt durch einen Messerträger mit seinen Messern in Schrägansicht;
- Fig. 3: eine ähnliche Schrägansicht wie in Fig. 2, jedoch mit kompletter Messerdarstellung;
- Fig. 4: eine Draufsicht auf ein Messer und seinen Messerträger;
- Fig. 5: eine Schrägansicht auf die komplette Messeranordnung und die Gegenschneide;
- Fig. 6: eine Schrägansicht der Gegenschneide;
- Fig. 7: eine Schrägansicht einer alternativen Bauform des Messerträgers;
- Fig. 8: eine Schrägansicht des Messers für den Messerträger gemäß Fig. 7.

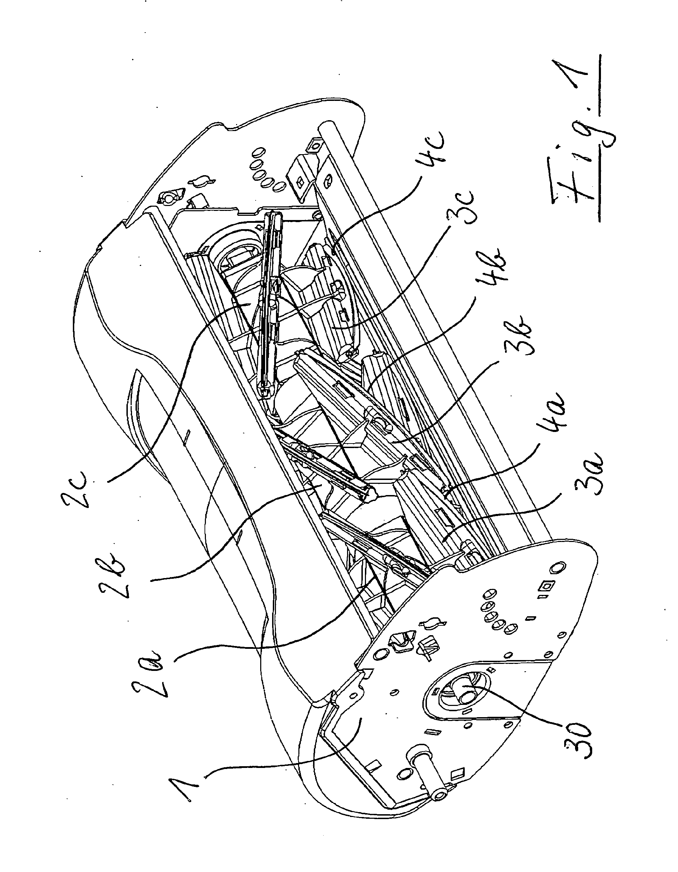

In Figur 1 erkennt man das Schneidwerk eines Spindelmähers, der in einem Gehäuse 1 untergebracht ist, wobei aus Gründen der Übersichtlichkeit auf die Darstellung des Fahrgestelles, des Antriebes, des Führungsbügels und anderer Teile verzichtet worden ist. In dem Gehäuse 1 sind drei axial aufeinander folgende Nabenkörper 2a, 2b, 2c über eine gemeinsame Antriebswelle 30 gelagert. Die Antriebswelle 30 wird in herkömmlicher Weise von einem Motor oder von den Rädern des Rasenmähers angetrieben. Jeder Nabenkörper weist an seinem äußeren Umfang mehrere in Umfangsrichtung aufeinander folgende und nach außen ragende Messerträger 3a bzw. 3b bzw. 3c auf, die ihrerseits an ihrem Außenrand jeweils ein Messer 4a bzw. 4b bzw. 4c tragen.

Die Messer 4a, 4b, 4c sind nicht schraubengangsförmig um die Welle 30 herum angeordnet, sondern in schräg zur Antriebswelle orientierten Ebenen und die Außenkontur der Messer weist eine etwa elliptische Form auf.

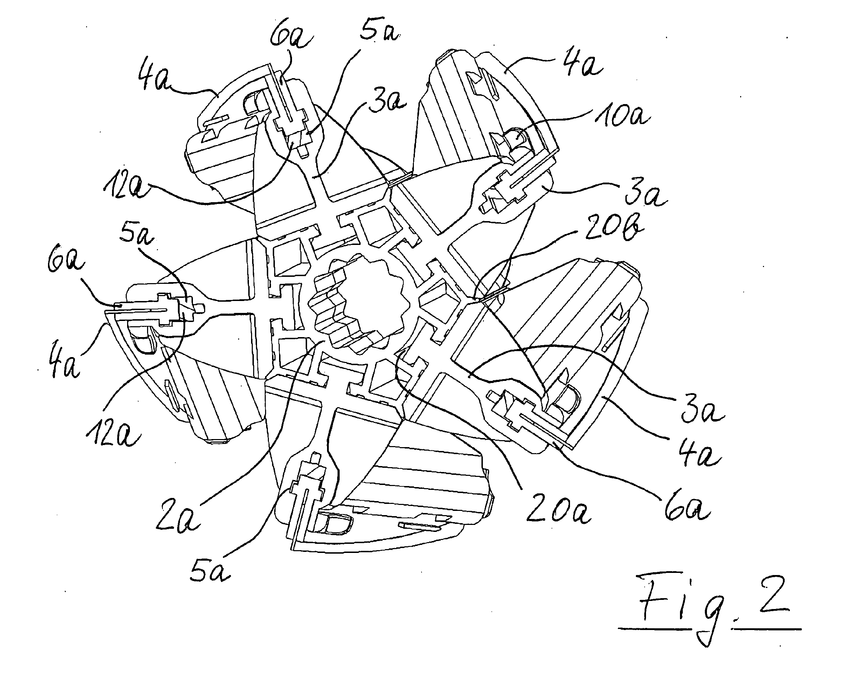

Der nähere Aufbau der Messer und Messerträger erschließt sich aus den Figuren 2 bis 4. Man erkennt dort, dass die Nabenkörper an ihrem äußeren Umfang einen polygonalen Querschnitt aufweisen und dass an jeder Polygonseite zumindest ein Schlitz 20a und Führungsflächen 20b angeordnet sind, die zur Aufnahme eines Messerträgers 3a dienen, derart, dass die Messerträger in Axialrichtung auf den Nabenkörper 2a aufgeschoben werden können und in Umfangsrichtung und Radialrichtung formschlüssig gehalten sind. Ihre Arretierung in Axialrichtung erfolgt entweder durch den Einbau der Nabenkörper in das Gehäuse 1 oder durch eine gemeinsame Welle oder durch andere an sich bekannte Befestigungsmittel.

Auf diese Weise trägt jeder Nabenkörper mehrere in Umfangsrichtung aufeinander folgende Messer. Die Messer verlaufen ebenso wie die Messerträger in jeweils einer Ebene, die mit der Rotationsachse einen Winkel von etwa 20° bis 40° bildet. Aus Gründen der einfacheren Herstellung ist dieser Winkel für alle Messer und alle Nabenkörper der gleiche, wobei jedoch die Messer des einen Nabenkörpers entgegengesetzt schräg zu denen eines anderen Nabenkörpers orientiert sein können.

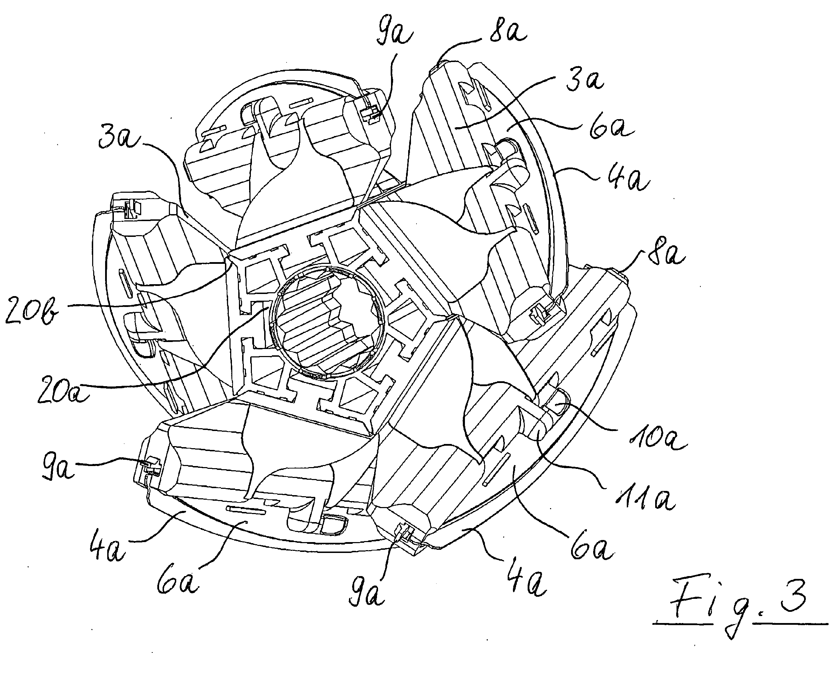

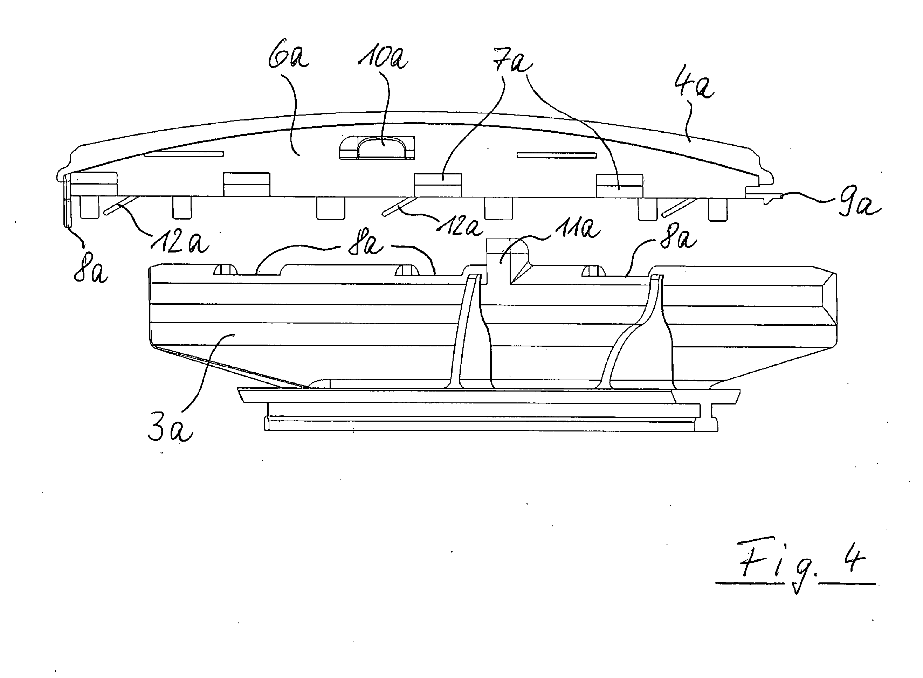

Da die Messer einem gewissen Verschleiß unterliegen, sind sie erfindungsgemäß leicht austauschbar in ihren jeweiligen Messerträgern gelagert. Dazu weisen die Messerträger jeweils an ihrem äußeren Bereich einen in Längsrichtung durchlaufenden Schlitz 5a auf, der das axial und/oder radial von außen eingeschobene Messer 4a bzw. 4b bzw. 4c aufnimmt. Damit das Messer 4a in dem Schlitz gehalten wird, weist es am Messerrücken ein Führungselement 6a auf, das seinerseits - siehe Fig. 4 - in Querrichtung ragende Vorsprünge 7a hat. Diese Vorsprünge passen bei einem bestimmten Längsversatz des Messers gegenüber seinem Messerträger in entsprechende Aussparungen 8a des Messerträgers, so dass das Messer in dieser Stellung radial von außen in den Schlitz 5a des Messerträgers eingesteckt werden kann. Sodann wird das Messer in Längsrichtung verschoben, bis sein linker Anschlag 8a am linken Ende des Messerträgers anstößt. In dieser Stellung schnappt eine am rechten Ende des Führungselementes angeordnete Sperrklinke 9a in eine entsprechende Aussparung des Messerträgers, so dass das Führungselement des Messers fest in seinem Messerträger arretiert ist. Man sieht diesen Zustand in Fig. 3.

Zum leichten Einstecken und Verschieben weist das Führungselement beidseits einen kleinen Griff 10a auf. Dieser Griff kann zusätzlich an einem Anschlag 11a des Messerträgers anliegen, wenn das Führungselement des Messers in seine Endposition eingerastet ist.

Wesentlich ist außerdem, dass das Messer jeweils annähernd in Radialrichtung verschiebbar am Messerträger - vorzugsweise über sein Führungselement - gelagert ist. Hierzu sind die Messer, genauer gesagt ihre Führungselemente 6a mit einigen nach unten abstehenden Federelementen 12a - siehe Fig. 4 - versehen. Diese als Biegebalken ausgebildeten Federelemente stützen sich bei eingebautem Messer an der Unterseite des Schlitzes 5a ab - vgl. Fig. 2 - und drücken das Messer nach außen. Dadurch ist unabhängig vom Verschleißzustand der Messer gewährleistet, dass sie bei Rotation stets in Anlage mit der Gegenschneide kommen.

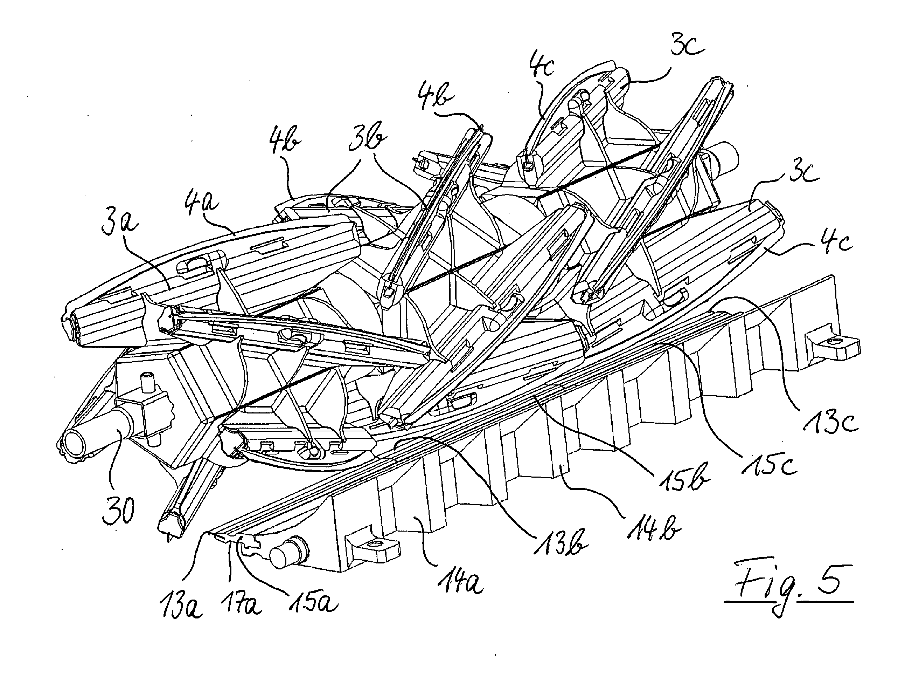

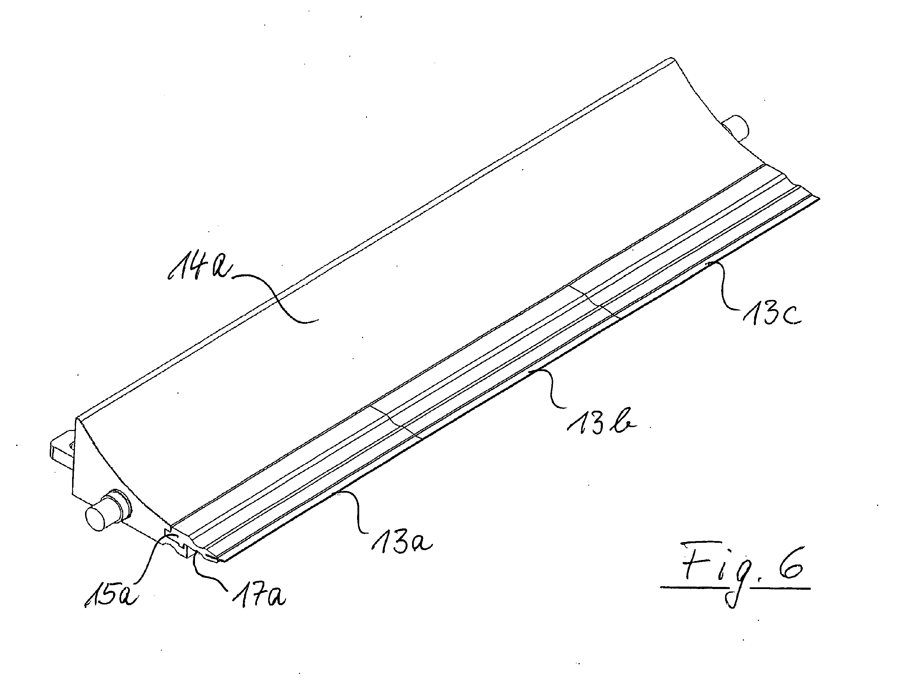

Die Gegenschneide ist aus Fig. 5 und 6 erkennbar. Sie verläuft in üblicher Weise parallel zur Rotationsachse der Messer, ist aber in drei Segmente 13a, 13b und 13c unterteilt. Wesentlich ist, dass auch diese Gegenschneide-Segmente leicht austauschbar in einem Messerträger 14a bzw. 14b bzw. 14c verklammert sind. Diese Verklammerung wird dadurch herbeigeführt, dass die Gegenschneide-Segmente an ihrer Basis mehrfach abgewinkelt und von oben in einen passenden Schlitz der Messerträger eingesetzt werden können. Werden die Messerträger dann in Anlage an die rotierenden Messer gebracht, so können sie nicht mehr nach oben ausweichen und somit auch nicht mehr aus ihren Messerträgern freikommen. Der Messerträger 14a ist in Fig. 5 segmentiert dargestellt; er kann aber gemäß Fig. 6 auch einstückig durchgehen.

Wie Fig. 6 außerdem zeigt, stecken die Gegenschneide-Segmente 13a, 13b und 13c nicht direkt in ihren Messerträgern, sondern sie sind an ihrem Messerrücken fest mit Führungselementen 15a bzw. 15b bzw. 15c verbunden. Diese Führungselemente bestehen ebenso wie bei den rotierenden Messern vorzugsweise aus Kunststoff, in welche die zweckmäßig aus Stahlblech bestehenden Messer unmittelbar eingespritzt sein können.

Schließlich erkennt man in Fig. 5 und 6, dass die Führungselemente 15a, 15b, 15c für die Gegenschneide-Segmente in Längsrichtung durchgehende Bereiche 17a geschwächten Querschnittes aufweisen, damit sie in Querrichtung etwa nachgeben können bzw. damit die Gegenschneide-Segmente gegenüber den rotierenden Messern elastisch vorgespannt werden können. Die Bereiche 17a geschwächten Querschnittes fungieren also quasi als Federelemente.

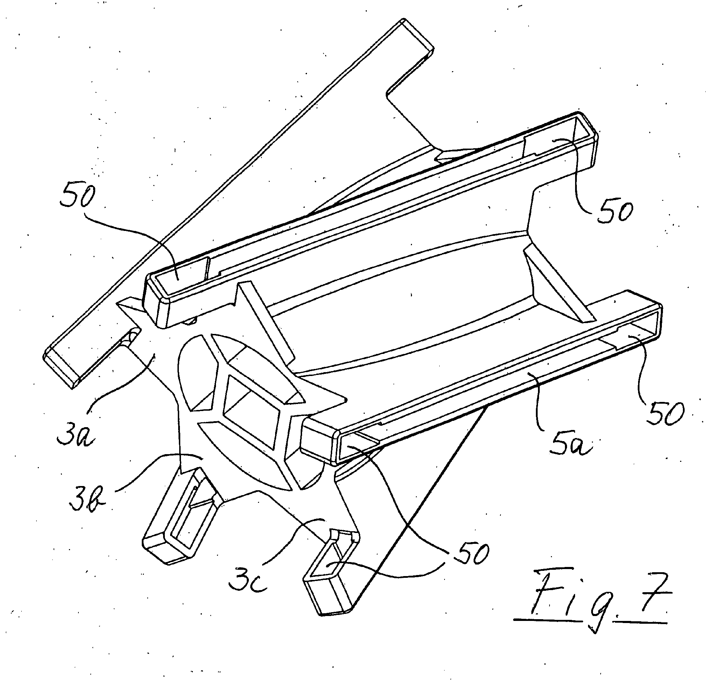

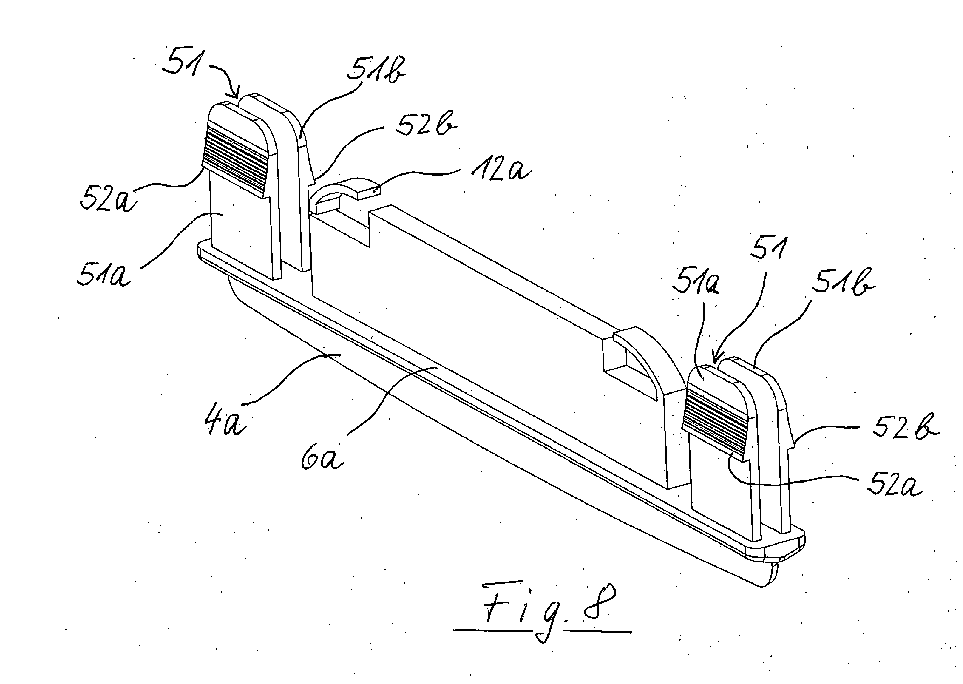

Die Figuren 7 und 8 zeigen eine alternative Bauform für die leicht austauschbare Verbindung zwischen Messer und Messerträger. Zum Einen sind hier die Messerträger 3a, 3b usw. nicht mehr wie bei der zuvor beschriebenen Bauform getrennt vom Nabenkörper 2a, sondern einstückig mit diesem hergestellt. Zum anderen sind die Schlitze 5a in den Messerträgern zur Aufnahme der Messer anders ausgebildet, nämlich mit Bereichen 50, die an der radial innenliegenden Seite offen sind. Im Ausführungsbeispiel befinden sich diese innen offenen Schlitzbereiche 50 an den beiden überstehenden Enden der Schlitze 5a, weil diese Bereiche leicht zugänglich sind. Die Messerträger könnten aber auch im mittleren Bereich Aussparungen aufweisen, über die die innenliegenden Schlitzbereiche zugänglich sind.

Der Sinn dieser speziellen Schlitz-Ausbildung erschließt sich aus Fig. 8. Man sieht dort das zugehörige Messer 4a mit seinem Führungselement 6a und den elastischen Federzungen 12a. Wird dieses Messer in den Schlitz 5a des Messerträgers radial eingesteckt, so liegen die Federzungen 12a ebenso wie in Fig. 2 dargestellt am Boden des Schlitzes 5a an.

Wesentlich ist nun, dass das Führungselement 6a - bevorzugt an seinen beiden Enden - etwa radial nach innen ragende Verrastungselemente 51 aufweist, die passend zu den Schlitzbereichen 50 des Messerträgers positioniert und dimensoniert sind, derart, dass sie beim Einstecken des Messers in seinen Schlitz 5a im Schlitzbereich 50 oder vorzugsweise an dem in Einsteckrichtung hinten liegenden Ende des Schlitzbereiches verrasten.

Gemäß Fig. 8 sind die Verrastungselemente 51 jeweils aus zwei elastischen Fingern 51a und 51b gebildet, die mit Abstand parallel zueinander angeordnet sind und an ihren Außenseiten Vorsprünge 52a bzw. 52b aufweisen. Diese Vorsprünge sind so ausgebildet, dass sie beim Einstecken des Messers in seinen Schlitz aufeinander zu gedrückt werden. Ist der Einsteckvorgang beendet, so haben die Vorsprünge 52a und 52b die Schlitzbereiche 50 passiert und können an dem radial innen liegenden Ende der Schlitzbereiche nach außen schnappen. Dadurch wird das Messer in Radialrichtung formschlüssig im Messerhalter fixiert.

Zum Lösen des Messers brauchen lediglich die Finger 51a und 5b an ihren überstehenden Enden zusammengedrückt werden, damit sie durch die Schlitzebereiche 50 wieder nach außen geschoben werden können.

Für die Fixierung des Messers in Längsrichtung können ebenfalls die Finger 52a und 52b herangezogen werden, indem diese Finger an stirnseitigen Abschlusswänden des Schlitzes 5a anliegen. Stattdessen kommen aber auch andere Anschlagflächen in Betracht.

Zu beachten ist noch, dass sowohl bei der Bauform gemäß Fig. 4 wie auch bei der Bauform gemäß Fig. 7 und 8 die Messer in Radialrichtung jeweils einen gewissen Bewegungsspielraum haben, damit die elastische Anpressung der Messer über die Federzungen 12a radial nach außen zur Gegenschneide 13a zur Geltung kommen kann.

Schließlich sei noch darauf hingewiesen, dass die beschriebene austauschbare Messerhalterung im Messerträger nicht nur bei den in den Ausführungsbeispielen gezeigten Messern, die in schrägen Ebenen um die Rotationsachse herum angeordnet sind, angewendet werden kann, sondern gleichermaßen auch bei solchen Messern, die schraubengangförmig um die Rotationsachse herum angeordnet sind.

Zusammenfassend zeichnet sich somit die erfindungsgemäße Schneidvorrichtung durch leichte Austauschbarkeit sowohl der rotierenden Messer wie auch der Gegenschneide-Segmente aus. Zugleich sorgt die federnde Anpressung, insbesondere der rotierenden Messer, für eine hohe Schnittqualität.

## Patentansprüche

1. Schneidvorrichtung für Pflanzen, insbesondere Rasenmäher, mit zumindest einem rotierenden Messer (4a) das mit einer ortsfesten Gegenschneide (13a) zusammenwirkt, wobei das Messer bogenförmig und schräg um seine Rotationsachse herum angeordnet ist, dabei jedoch in einer Ebene verläuft und diese Ebene einen Winkel gegenüber der Rotationsachse von maximal 45°, vorzugsweise maximal 35° aufweist,
**dadurch gekennzeichnet,**
**dass** das zumindest eine Messer (4a) und/oder die Gegenschneide (13a) in jeweils einem Messerträger (3a bzw. 15a) austauschbar angeordnet sind.

2. Schneidvorrichtung nach Anspruch 1,
**dadurch gekennzeichnet,**
**dass** das Messer (4a) und/oder die Gegenschneide (13a) durch eine Rast- oder Schnappverbindung in ihrem jeweiligen Messerträger (3a, 14a) gehalten sind.

3. Schneidvorrichtung nach Anspruch 1,
**dadurch gekennzeichnet,**
**dass** das Messer (4a) und/oder die Gegenschneide (13a) in zumindest einem Schlitz ihres Messerträgers (3a, 14a) gelagert sind.

4. Schneidvorrichtung nach Anspruch 1,
**dadurch gekennzeichnet,**
**dass** die Messer (4a) etwa quer zu seiner Längserstreckung in zumindest einen Schlitz (5a) seines Messerträgers (3a) einsteckbar und sodann durch eine etwa axiale Verschiebung in diesem Schlitz arretierbar ist.

5. Schneidvorrichtung nach Anspruch 1,
**dadurch gekennzeichnet,**
**dass** das Messer (4a) etwa quer zu seiner Längserstreckung in zumindest einen Schlitz (5a) seines Messerträgers (3a) einsteckbar und durch elastische Verrastungselemente (51a, 51b) darin arretierbar ist.

6. Schneidvorrichtung nach Anspruch 3, 4 oder 5,
**dadurch gekennzeichnet,**
**dass** mehrere in Umfangsrichtung aufeinander folgende, vorzugsweise etwa axial verlaufende Schlitze (5a) vorgesehen sind.

7. Schneidvorrichtung nach Anspruch 1,
**dadurch gekennzeichnet,**
**dass** die Messerträger (3a) über eine Steckverbindung, vorzugsweise über axial verlaufende Schlitze (20a) mit einer Antriebswelle (30) verbindbar sind.

8. Schneidvorrichtung nach Anspruch 1,
**dadurch gekennzeichnet,**
**dass** sich die Messer (4a) nur über einen Umfangswinkel von maximal 150°, vorzugsweise maximal 100° eines um die Rotationsachse gedachten Kreisbogens erstrecken.

9. Schneidvorrichtung nach Anspruch 1,
**dadurch gekennzeichnet,**
**dass** in einer Radialebene der Rotationsachse mehr als zwei, vorzugsweise mehr als drei in Umfangsrichtung aufeinander folgende Messer (4a) angeordnet sind.

10. Schneidvorrichtung nach Anspruch 1,
**dadurch gekennzeichnet,**
**dass** axial benachbarte Messer (4a, 4b, 4c) teilweise nicht parallel, sondern entgegengesetzt zueinander orientiert sind.

11. Schneidvorrichtung nach Anspruch 1,
**dadurch gekennzeichnet,**
**dass** das Messer (4a) und/oder die Gegenschneide (13a) an ihrem jeweils der Schneidkante gegenüberliegenden Rand mit einem Führungselement (6a bzw. 15a) verbunden ist und dieses Führungselement (6a bzw. 15a) austauschbar im Messerträger (3a bzw. 14a) angeordnet ist.

12. Schneidvorrichtung nach Anspruch 11,
**dadurch gekennzeichnet,**
**dass** das Führungselement (6a) Verrastungselemente, insbesondere elastische Finger (51a, 51b) aufweist, die formschlüssig am Messerträger (3a) verrasten.

13. Schneidvorrichtung nach Anspruch 12,
**dadurch gekennzeichnet,**
**dass** jeweils 2 in entgegengesetzten Richtungen einrastende Verrastungselemente, insbesondere Finger (51a, 51b) vorgesehen sind.

14. Schneidvorrichtung nach Anspruch 12,
**dadurch gekennzeichnet,**
**dass** die Verrastungselemente, insbesondere Finger (51a, 51b) in Schlitzbereiche (50a) des Messerträgers (3a) einrasten und dass sie in eingerastetem Zustand teilweise aus den Schlitzbereichen (50a) vorstehen.

15. Schneidvorrichtung nach Anspruch 11,
**dadurch gekennzeichnet,**
**dass** das Führungselement (6a, 15a) aus Kunststoff besteht.

16. Schneidvorrichtung nach Anspruch 1,
**dadurch gekennzeichnet,**
**dass** das Messer (4a) und/oder die Gegenschneide (13a) aus einem Metallband, insbesondere Federstahlband, besteht.

17. Schneidvorrichtung nach Anspruch 15,
**dadurch gekennzeichnet,**
**dass** das Messer (4a, 13a) in seinem Messerrücken von dem aus Kunststoff bestehenden Führungselement (6a, 15a) umspritzt ist.

18. Schneidvorrichtung nach Anspruch 1, **dadurch gekennzeichnet, dass** das Messer (4a) und/oder die Gegenschneide (13a) durch Federelemente (12a) relativ gegeneinander vorgespannt sind.

19. Schneidvorrichtung nach Anspruch 18,
**dadurch gekennzeichnet,**
**dass** die Federelemente (12a) zur Vorspannung des Messers (4a) zwischen dem Messerträger (3a) und dem Führungselement (6a) angeordnet sind.

20. Schneidvorrichtung nach Anspruch 18 oder 19,
**dadurch gekennzeichnet,**
**dass** die Federelemente (12a) unmittelbar an den Messerträger (3a) und/oder das Führungselement (6a) angeformt sind.

21. Schneidvorrichtung nach Anspruch 1,
**dadurch gekennzeichnet,**
**dass** die Gegenschneide in mehrere axial benachbarte Segmente (13a, 13b, 13c) unterteilt ist.

22. Schneidvorrichtung nach Anspruch 21,
**dadurch gekennzeichnet,**
**dass** die Gegenschneide-Segmente (13a, 13b, 13c) jeweils individuell federnd gelagert sind.

23. Schneidvorrichtung nach einem der vorhergehenden Ansprüche,
**dadurch gekennzeichnet,**
**dass** die Messer (4a) nicht in schrägen Ebenen um die Rotationsachse herum angeordnet sind, sondern schraubengangförmig um die Rotationsachse verlaufen.
